# EUROPEAN PATENT APPLICATION

(11) **EP 4 521 250 A1**
(43) Date of publication of application: **12.03.2025**
(21) Application number: 24193568.3
(22) Date of filing: 08.08.2024
(51) Int. Cl.: G06F 9/50, G06F 8/61, G06F 9/455

(54) **CLUSTER MANAGEMENT METHOD AND APPARATUS, ELECTRONIC DEVICE, AND STORAGE MEDIUM**

(30) Priority: 29.08.2023 CN 202311103293
(71) Applicant: Beijing Volcano Engine Technology Co., Ltd., Beijing 100190 (CN)
(72) Inventor: ZHAO, Gang, Beijing, 100028 (CN); ZHAO, Jianchuan, Beijing, 100028 (CN); JIANG, Jiafu, Beijing, 100028 (CN); CHEN, Qiang, Beijing, 100028 (CN); ZHU, Yaoxin, Beijing, 100028 (CN)
(74) Representative: Dentons UK and Middle East LLP

(57) **Abstract**

The present disclosure provides a cluster management method, device, electronic device and storage medium. The cluster management method includes: initiating, by a meta cluster, an addition and deletion task for a work cluster, wherein the addition and deletion task for a work cluster is used for instructing addition of a specified work cluster to a cluster system or instructing deletion of the specified work cluster from the cluster system (S 101); and controlling the specified work cluster to implement corresponding cluster deployment or removal in the cluster system according to instruction information of the addition and deletion task (S102).

## Description

### CROSS-REFERENCE TO RELATED APPLICATION

This application claims the priority to and benefits of the Chinese Patent Application, No. 202311103293.1, which was filed on August 29, 2023. The aforementioned patent application is hereby incorporated by reference in its entirety.

### TECHNICAL FIELD

The present disclosure relates to the technical field of computers, and particularly, to a cluster management method and apparatus, an electronic device, and a storage medium.

### BACKGROUND

Kubernetes (also known as K8s) is a portable, extensible container orchestration platform for managing containerized workloads and services. By containerized transformation and deployment of business in Kubernetes, capabilities such as rapid deployment and fault self-recovery of a business application can be realized. Meanwhile, with the orchestration and scheduling capabilities of Kubernetes, auto scaling of business services can be realized to cope with business pressures of different loads.

Usually, one Kubernetes cluster is split into a management control node (also known as a master node) and a work node. The management control node is configured to manage meta data, container scheduling and orchestration, and the like of the entire cluster. However, due to limited management control efficiency and load capacity of a single Kubernetes cluster, the number of work nodes managed within the single cluster is limited, which in turn affects the use experience of the Kubernetes cluster.

### SUMMARY

Embodiments of the present disclosure provide a cluster management method, which comprises:
initiating, by a meta cluster, an addition and deletion task for a work cluster, wherein the addition and deletion task for a work cluster is used for instructing addition of a specified work cluster to a cluster system or instructing deletion of the specified work cluster from the cluster system, wherein the cluster system comprises at least one cluster; the at least one cluster comprises the meta cluster and at least one work cluster, the meta cluster is configured to execute operation and maintenance management control of the cluster system, the operation and maintenance management control comprises addition and deletion processing of a work cluster, and each of the at least one work cluster carries a business container to perform a business task; and
controlling the specified work cluster to implement corresponding cluster deployment or removal in the cluster system according to instruction information of the addition and deletion task.

In a possible implementation, the method further comprises:
initializing a bootstrap environment for deploying the meta cluster;
deploying a database for storing a cross-cluster domain name, deploying a domain name resolution server for providing cross-cluster domain name resolution service, and deploying an automated operation and maintenance tool and a remote execution engine;
   and
performing a bootstrap deployment of the meta cluster.

In a possible implementation, wherein the instruction information of the addition and deletion task comprises cluster addition instruction information, wherein the cluster addition instruction information is used for instructing to newly add a first work cluster; and the controlling the specified work cluster to implement corresponding cluster deployment or removal in the cluster system according to instruction information of the addition and deletion task comprises:
performing a pre-deployment operation according to the cluster addition instruction information to implement intercommunication without a password between the first work cluster and the meta cluster;
building a remote execution engine for subsequent remote operation and maintenance based on the first work cluster; and
performing a bootstrap deployment of the first work cluster.

In a possible implementation, wherein the instruction information of the addition and deletion task comprises cluster deletion instruction information, wherein the cluster deletion instruction information is used for instructing to delete a second work cluster; and the controlling the specified work cluster to implement corresponding cluster deployment or removal in the cluster system according to instruction information of the addition and deletion task comprises:
cleaning up all components of the second work cluster by remotely executing a cleanup program according to the cluster deletion instruction information;
in response to completion of cleaning up the all components, generating a cleanup result feedback information by the second work cluster, and sending the cleanup result feedback information to the meta cluster; and
controlling the meta cluster to delete meta information of the second work cluster from the meta cluster based on the cleanup result feedback information.

In a possible implementation, wherein each cluster comprises a plurality of nodes, the cluster management method further comprises:
for each cluster, dividing the plurality of nodes into at least one node pool according to a type of a business task performed by each node in the cluster, wherein each node pool comprises at least one node.

In a possible implementation, the method further comprises:
initiating, by the meta cluster, a node addition task, wherein the node addition task is used for instructing a first target work cluster to add a first work node in the cluster system; and
according to instruction information of the node addition task, controlling the first target work cluster to perform pre-checking, pre-deployment, automated operation and maintenance and remote execution engine expansion, and cluster expansion, to implement deployment of the first work node in the first target work cluster.

In a possible implementation, the method further comprises:
initiating, by the meta cluster, a node deletion task, wherein the node deletion task is used for instructing a second target work cluster to delete a second work node in the cluster system; and
according to instruction information of the node deletion task, controlling the second target work cluster to perform pre-checking, reduce automated operation and maintenance and remote execution engine work node, and reduce the second work node.

In a possible implementation, the method further comprises:
receiving, by the meta cluster, a domain name resolution request sent by any work cluster;
controlling the meta cluster to search for a resolution work cluster matching the domain name resolution request based on the domain name resolution server that is deployed, and forwarding the domain name resolution request to the resolution work cluster; and
controlling the resolution work cluster to resolve the domain name resolution request to generate a corresponding domain name resolution result, and sending the domain name resolution result to the any work cluster by the meta cluster.

The present disclosure provides a cluster management apparatus, which comprises:
a task initiation module, configured to initiate, by a meta cluster, an addition and deletion task for a work cluster, wherein the addition and deletion task for a work cluster is used for instructing addition of a specified work cluster to a cluster system or instructing deletion of the specified work cluster from the cluster system, wherein the cluster system comprises at least one cluster; the at least one cluster comprises the meta cluster and at least one work cluster, the meta cluster carries operation and maintenance management control of the cluster system; the operation and maintenance management control comprises addition and deletion processing of a work cluster; and each of the at least one work cluster carries a business container to perform a business task; and
a cluster addition and deletion module, configured to control the specified work cluster to implement corresponding cluster deployment or removal in the cluster system according to instruction information of the addition and deletion task.

In a possible implementation, the cluster addition and deletion module is further used for:
initializing a bootstrap environment for deploying the meta cluster;
deploying a database for storing a cross-cluster domain name, deploying a domain name resolution server for providing cross-cluster domain name resolution service, and deploying an automated operation and maintenance tool and a remote execution engine;
   and
performing a bootstrap deployment of the meta cluster.

In a possible implementation, wherein the instruction information of the addition and deletion task comprises cluster addition instruction information, wherein the cluster addition instruction information is used for instructing to newly add a first work cluster; the cluster addition and deletion module is further used for:
performing a pre-deployment operation according to the cluster addition instruction information to implement intercommunication without a password between the first work cluster and the meta cluster;
building a remote execution engine for subsequent remote operation and maintenance based on the first work cluster; and
performing a bootstrap deployment of the first work cluster.

In a possible implementation, wherein the instruction information of the addition and deletion task comprises cluster deletion instruction information, wherein the cluster deletion instruction information is used for instructing to delete a second work cluster; the cluster addition and deletion module is further used for:
cleaning up all components of the second work cluster by remotely executing a cleanup program according to the cluster deletion instruction information;
in response to completion of cleaning up the all components, generating a cleanup result feedback information by the second work cluster, and sending the cleanup result feedback information to the meta cluster; and
controlling the meta cluster to delete meta information of the second work cluster from the meta cluster based on the cleanup result feedback information.

In a possible implementation, wherein each cluster comprises a plurality of nodes, the apparatus further comprises:
a node processing module, used for each cluster, dividing the plurality of nodes into at least one node pool according to a type of a business task performed by each node in the cluster, wherein each node pool comprises at least one node.

In a possible implementation, the task initiation module is further used for:
initiating, by the meta cluster, a node addition task, wherein the node addition task is used for instructing a first target work cluster to add a first work node in the cluster system;
the node processing module is further used for:
   according to instruction information of the node addition task, controlling the first target work cluster to perform pre-checking, pre-deployment, automated operation and maintenance and remote execution engine expansion, and cluster expansion, to implement deployment of the first work node in the first target work cluster.

In a possible implementation, the task initiation module is further used for:
initiating, by the meta cluster, a node deletion task, wherein the node deletion task is used for instructing a second target work cluster to delete a second work node in the cluster system;
the node processing module is further used for:
   according to instruction information of the node deletion task, controlling the second target work cluster to perform pre-checking, reduce automated operation and maintenance and remote execution engine work node, and reduce the second work node.

In a possible implementation, the apparatus further comprises a domain name processing module, and the domain name processing module is used for:
receiving, by the meta cluster, a domain name resolution request sent by any work cluster;
controlling the meta cluster to search for a resolution work cluster matching the domain name resolution request based on the domain name resolution server that is deployed, and forwarding the domain name resolution request to the resolution work cluster; and
controlling the resolution work cluster to resolve the domain name resolution request to generate a corresponding domain name resolution result, and sending the domain name resolution result to the any work cluster by the meta cluster.

Embodiments of the present disclosure provide an electronic device, which comprises a processor, a memory, and a bus, wherein the memory stores machine-readable instructions executable by the processor, when the electronic device is running, the processor communicates with the memory by means of the bus, and the machine-readable instructions, when executed by the processor, cause the cluster management method according to any one of the above implementations.

Embodiments of the present disclosure provide a computer-readable storage medium, on which a computer program is stored, wherein when the computer program is executed by a processor, the cluster management method according to any one of the above implementations is performed.

In order to make the above-mentioned objectives, features and advantages of the present disclosure more obvious and easier to understand, preferred embodiments are specifically cited below and described in detail with reference to the accompanying drawings.

### BRIEF DESCRIPTION OF DRAWINGS

In order to more clearly illustrate the technical solutions of the embodiments of the present disclosure, the following is a brief introduction to the drawings required for use in the embodiments. The drawings herein are incorporated into the specification and constitute a part of the specification. These drawings illustrate embodiments consistent with the present disclosure and are used together with the specification to illustrate the technical solutions of the present disclosure. It should be understood that the following drawings only illustrate certain embodiments of the present disclosure and should not be regarded as limiting the scope. For ordinary technicians in this field, other relevant drawings can also be obtained based on these drawings without creative work.
Fig. 1 illustrates a flowchart of a cluster management method provided by some embodiments of the present disclosure;
Fig. 2 illustrates a schematic diagram of an architecture of a cluster system provided by some embodiments of the present disclosure;
Fig. 3 illustrates a flowchart of a bootstrap method of a meta cluster provided by an embodiment of the present disclosure;
Fig. 4 illustrates a schematic diagram of a deployment status of nodes after meta cluster bootstrap provided by an embodiment of the present disclosure;
Fig. 5 illustrates a schematic diagram of a node pool in a cluster provided by some embodiments of the present disclosure;
Fig. 6 illustrates a schematic diagram of a process of adding a node provided by some embodiments of the present disclosure;
Fig. 7 illustrates a schematic diagram of a process of deleting a node provided by some embodiments of the present disclosure;
Fig. 8 illustrates a flowchart of a domain name processing method provided by some embodiments of the present disclosure;
Fig. 9 illustrates a schematic diagram of a domain name resolution process by some embodiments of the present disclosure;
Fig. 10 illustrates a structural schematic diagram of a cluster management apparatus provided by some embodiments of the present disclosure;
Fig. 11 illustrates a structural schematic diagram of another cluster management apparatus provided by some embodiments of the present disclosure; and
Fig. 12 illustrates a schematic diagram of an electronic device provided by some embodiments of the present disclosure.

### DETAILED DESCRIPTION

In order to make the objectives, technical solutions, and advantages of the embodiments of the present disclosure clearer, the technical solutions in the embodiments of the present disclosure are clearly and completely described below with reference to the drawings in the embodiments of the present disclosure. Apparently, the described embodiments are merely a part rather than all of the embodiments of the present disclosure. Generally, the components of the embodiments of the present disclosure described and shown in the drawings may be arranged and designed in various manners. Therefore, the detailed description of the embodiments of the present disclosure with reference to the accompanying drawings is not intended to limit the protection scope of the present disclosure, but merely to represent the selected embodiments of the present disclosure. All other embodiments derived from the embodiments of the present disclosure by those of ordinary skill in the art without creative efforts shall fall within the protection scope of the present disclosure.

It should be noted that similar reference signs and letters represent similar items in the drawings below. Therefore, once an item is defined in one drawing, it does not need to be further defined and described in subsequent drawings.

The term "and/or" used herein merely describes an association relationship, and indicates that three types of relationships may exist. For example, A and/or B may indicate that A exists alone, A and B coexist, or B exists alone. In addition, the term "at least one" used herein represents any one of a plurality of things or any combination of at least two of a plurality of things. For example, at least one of A, B, C may represent any one or more elements selected from a set constituted by A, B, and C.

It will be understood that before using the technical solutions disclosed in various embodiments of the present disclosure, a user should be notified of a type, a range of use, a usage scenario, etc. of personal information involved in the present disclosure in an appropriate manner in accordance with relevant laws and regulations, and these should be authorized by the user.

It has been found by research that a Kubernetes cluster usually includes a management control node and a work node. The management control node is configured to manage meta data, container scheduling and orchestration, and the like of the entire cluster. Specifically, a node proxy program (e.g., kubelet) and a service proxy program (e.g., kube-proxy) are deployed on each node. The node proxy program is configured to communicate with a management control component, and is responsible for a full-life cycle of a container application, including container addition/deletion/modification and the like. The service proxy program is configured for proxy cluster services. A client may communicate with a container through a service domain name. Thus, an underlying container resource architecture (e.g., the number of containers, a container deployment location) can be shielded.

However, due to limited management control efficiency and load capacity of a single Kubernetes cluster, the number of work nodes managed within the single cluster is limited (e.g., the number typically cannot exceed 5000), thereby imposing a limitation on use scenarios of Kubernetes. For example, the Kubernetes cannot be applied to highly demanding large-scale enterprises.

Based on the above research, an embodiment of the present disclosure provides a cluster management method. An addition and deletion task for a work cluster can be initiated by a meta cluster, wherein the addition and deletion task for a work cluster is used for instructing addition of a specified work cluster to a cluster system or instructing deletion of the specified work cluster in the cluster system, wherein the cluster system includes at least one cluster, the at least one cluster includes one meta cluster and at least one work cluster, the meta cluster is configured to operation and maintenance management control of the cluster system, the operation and maintenance management control includes addition and deletion processing of a work cluster, and each of the at least one work cluster carries a business container to perform a business task. Corresponding cluster deployment or removal of the specified work cluster in the cluster system is controlled according to instruction information of the addition and deletion task.

In this way, even when a large number of nodes are needed, the corresponding cluster addition task can be initiated by the meta cluster according to an actual requirement to increase a corresponding number of work clusters. Moreover, when the cluster needs to be scaled down, a cluster scaling-down task is initiated by the meta cluster to scale down the corresponding work cluster. Thus, this helps improve the management control efficiency of the cluster system and the applicability of the cluster system.

Embodiments of the present disclosure provide at least a cluster management method and apparatus, an electronic device, and a storage medium. Cluster addition and deletion tasks can be initiated through meta cluster according to actual needs, and cluster system can be expanded or reduced, which helps to improve the applicability of the cluster system.

For a better understanding of this embodiment, an execution subject for the cluster management method provided by embodiments of the present disclosure is firstly described in detail. The execution subject for the cluster management method provided by embodiments of the present disclosure is an electronic device. In the embodiments of the present disclosure, the electronic device is a server. The server may be an independent physical server, or may be a server cluster or a distributed system constituted by a plurality of physical servers, or may be a cloud server that provides basic cloud computing services such as cloud services, cloud databases, cloud computing, cloud storage, big data, and artificial intelligence platforms.

In other embodiments, the electronic device may also be a terminal device. The terminal device includes a mobile device, a computing device, a vehicular device, a wearable device, and the like. Moreover, the cluster management method may also be implemented by a processor calling computer-readable instructions stored on a memory.

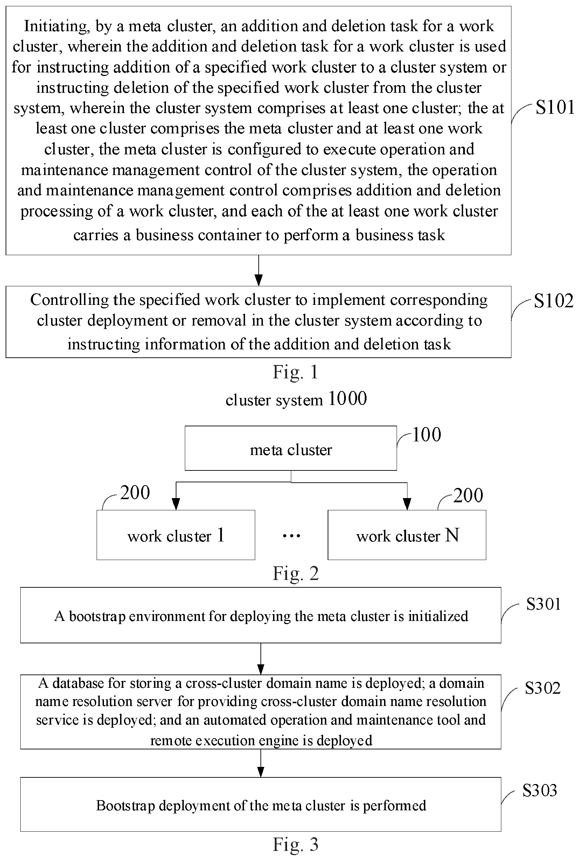

The cluster management method provided by an embodiment of the present disclosure is described in detail below with reference to the drawings. With reference to Fig. 1, there is shown a flowchart of a cluster management method provided by an embodiment of the present disclosure. The cluster management method includes the following steps S101 to S102.

At S101, an addition and deletion task for a work cluster is initiated by a meta cluster, wherein the addition and deletion task for a work cluster is used for instructing addition of a specified work cluster to a cluster system or instructing deletion of the specified work cluster from the cluster system, wherein the cluster system includes at least one cluster; the at least one cluster includes one meta cluster and at least one work cluster, the meta cluster is configured to execute operation and maintenance management control of the cluster system, the operation and maintenance management control includes addition and deletion processing of a work cluster, and each of the at least one work cluster carries a business container to perform a business task.

With reference to Fig. 2, Fig. 2 is a schematic diagram of an architecture of a cluster system provided by an embodiment of the present disclosure. As shown in Fig. 2, the cluster system 1000 includes a meta cluster 100 and at least one work cluster 200. The meta cluster 100 is configured for operation and maintenance management control of the cluster system 1000. Specifically, the operation and maintenance management control include, but is not limited to, addition and deletion of the specified work cluster, addition and deletion of a node in the work cluster, installation and deployment of a business component, and the like. Each work cluster is configured to carry a particular business container to perform a corresponding business task.

The clusters in the embodiments of the present disclosure are Kubernetes clusters, usually known as K8s clusters. Each cluster includes at least one master node Master, and at least one work node Worker in communication connection with each master node Master.

It should be understood that the meta cluster may also carry a business container. In some embodiments, in a scenario in which a small number of nodes are needed, the cluster system 1000 may also include only the meta cluster. In this case, the meta cluster 100 serves as the meta cluster and the work cluster.

In the architecture of the cluster system shown in Fig. 2, since the meta cluster 100 includes global information of the entire cluster system 1000. Therefore, the bootstrap of the meta cluster 100 is also crucial. A bootstrap process of the meta cluster 100 is described in detail below.

With reference to Fig. 3, there is shown a flowchart of a bootstrap method of a meta cluster provided by an embodiment of the present disclosure. The bootstrap method includes the following steps S301 to S303.

At S301, a bootstrap environment for deploying the meta cluster is initialized.

The process of initializing the bootstrap environment for deploying the meta cluster, i.e., standard initialization (InitEnv) of the bootstrap environment, specifically includes: downloading an installation package (binary), initializing a virtual standard operating environment, using no password between nodes, deploying ansible automated operation and maintenance tool, and the like. With the consideration of a disaster tolerance requirement, the bootstrap environment generally refers to a plurality of physical nodes. Therefore, a configuration without a password needs to be provided among a plurality of nodes.

In the embodiments of the present disclosure, logging in without a password may be realized in two ways: logging in with a password and single sign on (SSO). Logging in with a password refers to presetting a machine login password in a configuration file. OpenSSH tool is used to configure logging in without a password between nodes. SSO refers to realizing that the bootstrap environment is free from a password by means of an authentication certificate applied from an authentication center in advance.

At S302, a database for storing a cross-cluster domain name is deployed; a domain name resolution server for providing cross-cluster domain name resolution service is deployed; and an automated operation and maintenance tool and remote execution engine is deployed.

The deployment of the database for storing cross-cluster domain name may be deployed as Region Etcd. Region Etcd is a distributed K-V database for storing cross-cluster domain names and resolving a domain name across clusters.

The deployment of the domain name resolution server may be Region domain name system (DNS) deployment. Specifically, Region Etcd may be used as underlying storage to provide the whole network with a cross-cluster domain name resolution service.

The deployment of the automated operation and maintenance tool and remote execution engine may be SaltStack deployment, wherein SaltStack is a large-scale automated operation and maintenance tool and remote execution engine of a C/S architecture; and unlike ansible, Server (salt-master) thereof, after receiving an authentication public key from a remote host (salt-minion), can subsequently perform remote operation and maintenance with the public key with no need to apply for a machine related authority or SSO authority again.

At S303, bootstrap deployment of the meta cluster is performed.

Specifically, the bootstrap deployment of the meta cluster includes deploying components such as kubelet, kubectl, and kubeadm. Kubelet, a node proxy in a K8s cluster, is responsible for maintaining a Pod on the node and ensuring healthy functioning of a container. There is one kubelet process running on each node. Kubectl is a command line tool of the K8s cluster and is installed on a master node of K8s. Kubeadm is a K8s deployment tool.

In the embodiments of the present disclosure, by deploying a database for storing cross-cluster domain names, a domain name resolution server that provides cross-cluster domain name resolution services, as well as automated operation and maintenance tools and a remote execution engine, cross-cluster management of other clusters and cross-cluster domain name resolution can be achieved through the meta cluster, which helps to improve the operation and maintenance control efficiency and performance of the meta-cluster.

In some embodiments, other deployments may also be carried out, e.g., underlying foundation services based on K8s deployment, such as container network interface (CNI), Zookeeper, MySQL, and infrastructure service programs, which will not be specifically defined here.

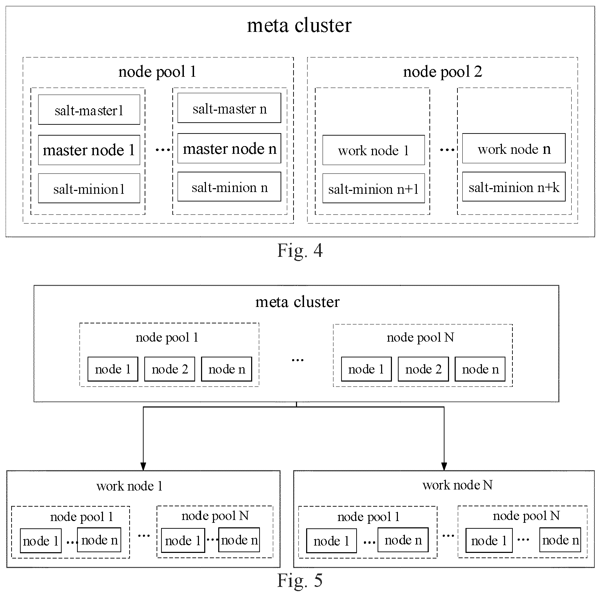

With reference to Fig. 4, there is shown a schematic diagram of a deployment status of nodes after meta cluster bootstrap provided by an embodiment of the present disclosure. In the cluster system, all bootstrap nodes are cluster master nodes (K8S-master) to guarantee high availability of the cluster. Each cluster master node is a remote management node (master) of a saltstack remote execution engine and configured to manage all nodes of the cluster. Each cluster master node is a remote execution node (minion) of the saltstack remote execution engine and can be remotely managed by a remote management node. This cluster is expanded by the subsequently added nodes according to roles (master or worker). If the subsequently added node is the cluster worker node, it is salt-minion as well; and if the subsequently added node is the cluster master node, it is salt-minion and also salt-master.

At S102, the specified work cluster is controlled to implement corresponding cluster deployment or removal in the cluster system according to instruction information of the addition and deletion task.

Specifically, the instruction information of the addition and deletion task includes cluster addition instruction information, the cluster addition instruction information is used for instructing to newly add a first work cluster. Exemplarily, the cluster addition instruction information is generated by the master node of the meta cluster, wherein the process of newly adding the first work cluster is a process of deploying running components on a bare computer.

In this implementation, the process of newly adding the first work cluster is similar to the bootstrap process of the meta cluster. The deployment of the work cluster may be completed through steps such as pre_install (pre-deployment, binary transfer), installing saltstack, and installing the cluster.

Therefore, controlling corresponding cluster deployment or removal of the specified work cluster in the cluster system according to the instruction information of the addition and deletion task may include the following steps (a) to (c):
(a) performing a pre-deployment operation according to the cluster addition instruction information to implement intercommunication without a password between the first work cluster and the meta cluster;
(b) building a remote execution engine for subsequent remote operation and maintenance based on the first work cluster; and
(c) performing a bootstrap deployment of the first work cluster.

In the embodiments of the present disclosure, the pre-deployment operation can realize the intercommunication without a password between the first work cluster and the meta cluster, which is beneficial to the subsequent automatic deployment. In addition, by building a remote execution engine, it is convenient for the meta cluster to control the first work cluster.

Specifically, a binary installation package may be acquired from the meta cluster. That is, the installation package may be transferred to a node to be deployed of the first work cluster by the meta cluster. As a matter of course, the installation package may also be downloaded again, which will not be defined specifically. The main function of pre-deployment is to accomplish intercommunication without a password between the meta cluster and the first work cluster node to be installed, and thus facilitates automated deployment of ansible. A complete saltstack remote execution engine is then built based on nodes to be deployed for subsequent remote operation and maintenance.

Optionally, after being deployed, the first work cluster may also register its own domain name with the meta cluster. In this way, when a domain name is resolved across clusters subsequently, the meta cluster can accurately route the domain name to the corresponding work cluster for resolving.

In a possible implementation, the instruction information of the addition and deletion task includes cluster deletion instruction information, and the cluster deletion instruction information is used for instructing to delete of a second work cluster. The second work cluster may be any specified work cluster in the cluster system. Therefore, controlling the specified work cluster to implement corresponding cluster deployment or removal in the cluster system according to the instruction information of the addition and deletion task may specifically include the following steps (1) to (3):
(1) cleaning up all components of the second work cluster by remotely executing a cleanup program according to the cluster deletion instruction information;
(2) in response to completion of cleaning up the all components, generating a cleanup result feedback information by the second work cluster, and sending the cleanup result feedback information to the meta cluster; and
(3) controlling the meta cluster to delete meta information of the second work cluster from the meta cluster based on the cleanup result feedback information.

It can be appreciated that in contrast to adding a work cluster, by means of the pre-deployed intercommunication without a password, deleting a work cluster is also initiated from the meta cluster. All the components on the second work cluster are cleaned up by remotely executing the cleanup program (SSH), and a result is fed back to the meta cluster for instructing it to clean up meta information afterwards.

In the embodiments of the present disclosure, all components on the second work cluster are cleaned up by remotely executing the cleanup program so that the component cleanup efficiency can be improved. Moreover, the meta cluster further deletes the meta information of the second work cluster from the meta cluster based on the cleanup result feedback information fed back by the second work cluster, such that management information in the meta cluster is updated immediately. This helps improve the accuracy of system management.

It can be appreciated that since a domain name is registered with the meta cluster when a work cluster is newly added, when the work cluster is deleted, in addition to the required deletion of the meta information of the second work cluster from the meta cluster, the domain name of the second work cluster also needs to be canceled from the meta cluster.

In a possible implementation, with reference to Fig. 5, for each cluster, the plurality of nodes may also be divided into at least one node pool according to a type of a business task performed by each node in the cluster, wherein each node pool includes at least one node.

In the embodiments of the present disclosure, since multiple nodes are divided into at least one node pool according to the type of business tasks executed by each node in the cluster, it is convenient to achieve effective resource isolation and deployment between different businesses when sharing the cluster management and control nodes.

Specifically, for each work cluster, different nodes may be logically divided into different node pools in the work cluster. For example, when a node is newly added, a corresponding node identifier may be configured for the node. In this way, the nodes having the same node identifier are assigned as the same node pool. Moreover, since the meta cluster is a work cluster, the nodes in the cluster may also be divided into different node pools (as shown in Fig. 4).

In this implementation, since the nodes in the cluster are divided into different node pools according to different business logic types, not only can mixed deployment and isolation of different business containers be satisfied, but also it can be realized that different businesses share the same set of cluster management control nodes without competing with each other for resources. Moreover, for each node pool, the node pool information may also be stored in a meta database of the meta cluster. The node pool information includes a cluster to which the node pool belongs, the number of nodes included in the node pool, a business type associated with the node pool, a usable region, a creation time, and the like. The business type may specifically include a storage service, a database service, and a middleware, etc., which will not be defined specifically.

It can be understood that in order to improve the applicability of the cluster system, in addition to the addition and deletion of the specified work cluster, a work node in each work cluster may be newly added and deleted to implement node expansion and reduction. Therefore, in some embodiments, the cluster management method further includes the following steps (I) to (II):
(I) initiating, by the meta cluster, a node addition task, wherein the node addition task is used for instructing a first target work cluster to add a first work node in the cluster system; and
(II) according to instruction information of the node addition task, controlling the first target work cluster to perform pre-checking, pre-deployment, automated operation and maintenance and remote execution engine expansion and cluster expansion, to implement deployment of the first work node in the first target work cluster.

In the embodiments of the present disclosure, nodes in each work cluster can be increased by the meta cluster, which in turn helps further improve the applicability of the cluster system.

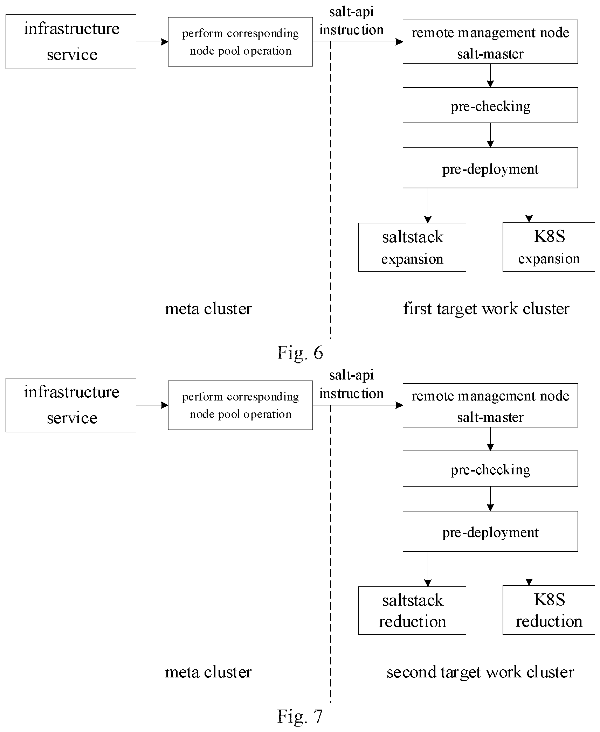

The first target work cluster may be any work cluster in the cluster system. Specifically, with reference to Fig. 6, the node addition task may be initiated by an infrastructure service in the meta cluster (e.g., a management control service in the meta cluster). A corresponding operation of newly adding a node pool is performed and a salt-api instruction is sent to the remote management node salt-master of the first target work cluster. The processes such as pre-checking, pre-deployment, saltstack expansion, and K8s expansion are then performed at the first target work cluster to complete the addition of the node.

The pre-checking includes checking the presence or absence of installation on a machine, checking whether a kernel version is correct, checking a configuration of an operating system, etc. The pre-deployment includes downloading an installation package for the newly added node, enabling intercommunication without a password for ansible, preparing python virtual environment, and the like.

Optionally, the cluster management method may further include the following steps (m) to (n):
(m) initiating, by the meta cluster, a node deletion task, and the node deletion task is used for instructing a second target work cluster to delete a second work node in the cluster system; and
(n) according to instruction information of the node deletion task, controlling the second target cluster to perform pre-checking, reduce automated operation and maintenance and remote execution engine work node, and reduce the second worker node.

The second target work cluster may be any work cluster in the cluster system. Specifically, with reference to Fig. 7, similar to adding a node, the node deletion task may be initiated by the infrastructure service in the meta cluster. A corresponding operation of deleting a node pool is performed and a salt-api instruction is sent by a pre-deployed saltstack architecture to the remote management node salt-master of the second target work cluster. A reduction operation is performed at the second target work cluster. The reduction operation includes the steps of pre-checking, removing a business module (if provided), reducing saltstack work nodes and cluster nodes, and the like.

In this way, a node in each work cluster may be deleted by the meta cluster. Thus, the nodes in the cluster system may be reduced accordingly when businesses are reduced. This helps increase a utilization ratio of resources.

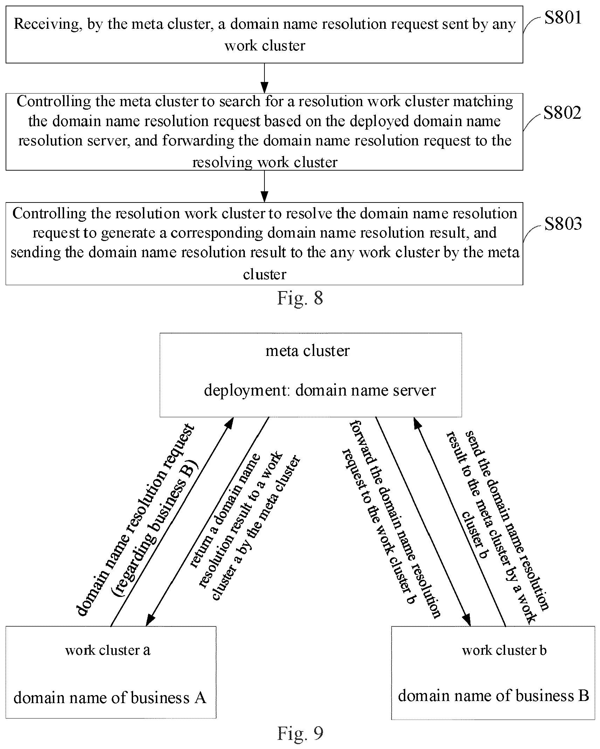

It should be understood that since the meta cluster is deployed with a domain name resolution server in bootstrapping. When a work cluster is newly added, each work cluster may send its own domain name to the meta cluster to implement registration of the domain name. Therefore, under the architecture of the cluster system, when domain name resolution cannot be realized within any work cluster, a domain name resolution request may be generated, and is sent to the meta cluster to realize domain name resolution by the meta cluster. Therefore, as shown in Fig. 8, in this embodiment, the cluster management method further includes the following steps S801 to S803.
S801, receiving, by the meta cluster, a domain name resolution request sent by any work cluster;
S802, controlling the meta cluster to search for a resolution work cluster matching the domain name resolution request based on the deployed domain name resolution server, and forwarding the domain name resolution request to the resolution work cluster; and
S803, controlling the resolution work cluster to resolve the domain name resolution request to generate a corresponding domain name resolution result, and sending the domain name resolution result to the any work cluster by the meta cluster.

In the embodiments of the present disclosure, when domain name resolution cannot be realized within any working cluster, a domain name resolution request can be generated and sent to a corresponding resolution work cluster by the meta cluster. After the domain name resolution request is resolved by the resolution work cluster, a corresponding domain name resolution result is generated and sent to the any work cluster by the meta cluster. As such, domain name resolution across clusters is realized, which makes subsequent access across clusters possible.

Specifically, with reference to Fig. 9, when the current domain name resolution request is resolved by a work cluster a, the domain name resolution request is sent to DNS of the meta cluster by DNS deployed for the work cluster a. That is, the domain name resolution request sent by any work cluster may be received by the meta cluster. The meta cluster may then find a resolution work cluster b matching the domain name resolution request based on the domain name resolution server, and forward the domain name resolution request to the resolution work cluster b. Next, the resolution work cluster b may generate a corresponding domain name resolution result according to the domain name resolution request, and send the domain name resolution result to the meta cluster. Finally, the domain name resolution result is forwarded by the meta cluster to the work cluster a, and then the resolution of the domain name is implemented.

In this way, domain name resolution of all K8s clusters of the whole network can be realized based on a deployment architecture of region DNS and region ETCD in the meta cluster. The problem that only an internal domain name of a cluster can be solved in the part is solved.

It will be appreciated by those skilled in the art that in the cluster management method described above, the order of writing the steps does not mean a strict performing order, which imposes no any limitation on the implementation process. The specific order of performing the steps should be determined by the functions thereof and a possible internal logic.

Based on the same technical concept, an embodiment of the present disclosure further provides a cluster management apparatus corresponding to the cluster management method. Since the principle of the cluster management apparatus to solve the problem in the embodiments of the present disclosure is similar to that of the above-mentioned cluster management method in the embodiments of the present disclosure, for the implementation of the cluster management apparatus, a reference may be made to the implementation of the cluster management method, and repetitions will be no longer described.

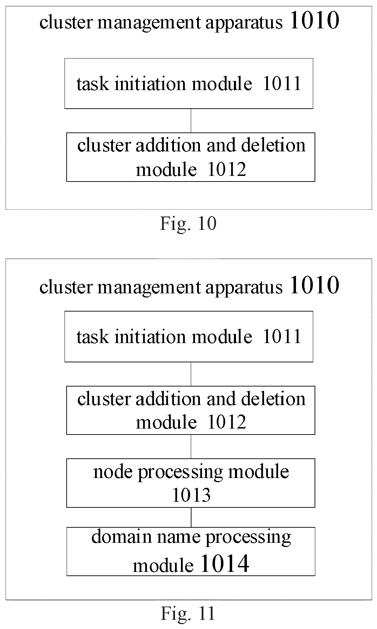

With reference to Fig. 10, there is shown a schematic diagram of a cluster management apparatus 1010 provided by an embodiment of the present disclosure. The cluster management apparatus includes:
a task initiation module 1011, configured to initiate, by a meta cluster, an addition and deletion task for a work cluster, wherein the addition and deletion task for a work cluster is used for instructing addition of a specified work cluster to a cluster system or instructing deletion of the specified work cluster from the cluster system, wherein the cluster system includes at least one cluster; the at least one cluster includes one meta cluster and at least one work cluster; the meta cluster is configured to execute operation and maintenance management control of the cluster system; the operation and maintenance management control includes addition and deletion processing of a work cluster; and each of the at least one work cluster carries a business container to perform a business task; and
a cluster addition and deletion module 1012, configured to control the specified work cluster to implement corresponding cluster deployment or removal in the cluster system according to instruction information of the addition and deletion task.

In a possible implementation, the cluster addition and deletion module 1012 is further configured to:
initialize a bootstrap environment for deploying the meta cluster;
deploy a database for storing a cross-cluster domain name, deploy a domain name resolution server for providing a cross-cluster domain name resolution service, and deploy an automated operation and maintenance tool and remote execution engine; and
perform a bootstrap deployment of the meta cluster.

In a possible implementation, the instruction information of the addition and deletion task includes cluster addition instruction information, and the cluster addition instruction information is used for instructing to newly add a first work cluster. The cluster addition and deletion module 1012 is specifically configured to:
perform a pre-deployment operation according to the cluster addition instruction information to implement intercommunication without a password between the first work cluster and the meta cluster;
build a remote execution engine for subsequent remote operation and maintenance based on the first work cluster; and
perform a bootstrap deployment of the first work cluster.

In a possible implementation, the instruction information of the addition and deletion task includes cluster deletion instruction information, and the deletion instruction information is used for instructing to delete of a second work cluster. The cluster addition and deletion module 1012 is specifically configured to:
clean up all components of the second work cluster by remotely executing a cleanup program according to the cluster deletion instruction information;
in response to completion of cleaning up the all components, generate a cleanup result feedback information by the second work cluster, and send the cleanup result feedback information to the meta cluster; and
control the meta cluster to delete meta information of the second work cluster from the meta cluster based on the cleanup result feedback information.

In a possible implementation, each cluster includes a plurality of nodes. With reference to Fig. 11, the cluster management apparatus further includes:
a node processing module 1013, configured to, for each cluster, divide the plurality of nodes into at least one node pool according to a type of a business task performed by each node in the cluster, wherein each node pool includes at least one node.

In a possible implementation, the task initiation module 1011 is further configured to:
initiate, by the meta cluster, a node addition task, and the node addition task is used for instructing a first target work cluster to add a first work node in the cluster system.

The node processing module 1013 is further configured to:
according to instruction information of the node addition task, control the target work cluster to perform pre-checking, pre-deployment, automated operation and maintenance and remote execution engine expansion and cluster expansion to implement g deployment of the first work node in the first target work cluster.

In a possible implementation, the task initiation module 1011 is further configured to:
initiate, by the meta cluster, a node deletion task, and the node deletion task is used for instructing a second target work cluster to delete a second work node in the cluster system.

The node processing module 1013 is further configured to:
according to instruction information of the node deletion task, control the second target cluster to perform pre-checking, reduce automated operation and maintenance and remote execution engine work node, and reduce the second work node.

In a possible implementation, the cluster management apparatus further includes a domain name processing module 1014. The domain name processing module 1014 is configured to:
receive, by the meta cluster, a domain name resolution request sent by any work cluster;
control the meta cluster to search for a resolution work cluster matching the domain name resolution request based on the deployed domain name resolution server, and forward the domain name resolution request to the resolution work cluster; and
control the resolution work cluster to resolve the domain name resolution request to generate a corresponding domain name resolution result, and send the domain name resolution result to the any work cluster by the meta cluster.

Regarding the descriptions of the processing flow of each module in the apparatus and an interactive flow between the modules, a reference may be made to the related descriptions in the above method embodiments, which will not be described in detail here.

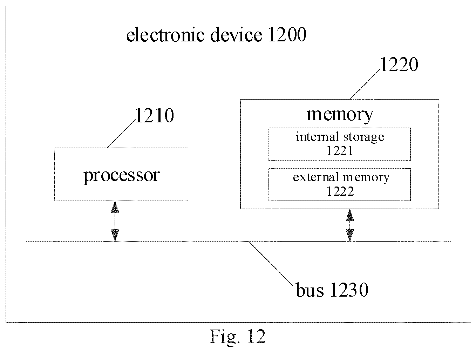

Based on the same inventive concept, an embodiment of the present disclosure further provides an electronic device. With reference to Fig. 12, there is shown a structural schematic diagram of an electronic device 1200 provided by an embodiment of the present disclosure, including a processor 1210, a memory 1220, and a bus 1230. The memory 1220 is configured to store executable instructions, and includes an internal storage 1221 and an external memory 1222. The internal storage 1221 mentioned here is also referred to as an internal memory for temporarily storing operational data in the processor 1210 and data exchanged with the external memory 1222 such as a hard disk. The processor 1210 exchanges data with the external memory 1222 through the internal storage 1221.

In the embodiments of the present disclosure, the memory 1220 is specifically configured to store an application code for performing the solutions of the present disclosure that is controlled and executed by the processor 1210. That is, when the electronic device 1200 is running, the processor 1210 communicates with the memory 1220 through the bus 1230 such that the processor 1210 executes the application code stored on the memory 1220 and thus performs the cluster management method described in any of the foregoing embodiments.

The memory 1220 may be, but not limited to, a random-access memory (RAM), a read only memory (ROM), a programmable read-only memory (PROM), an erasable programmable read-only memory (EPROM), an electric erasable programmable read-only memory (EEPROM), etc.

The processor 1210 may be an integrated circuit chip capable of signal processing. The processor may be a general-purpose processor, including a central processing unit (CPU), a network processor (NP), or the like; or may be a digital signal processor (DSP), an application-specific integrated circuit (ASIC), a field-programmable gate array (FPGA) or another programmable logic device, a discrete gate, a transistor logic device, or a discrete hardware component. The processor can implement or execute the methods, steps and logical block diagrams disclosed by the examples of the present disclosure. The general-purpose processor may be a microprocessor or any conventional processor.

It may be appreciated that the structure illustrated in the embodiments of the present disclosure does not impose a particular limitation on the electronic device 1200. In some other embodiments of the present disclosure, the electronic device 1200 may include more or fewer components than those shown in the figure, or some components may be combined, or some components may be split, or different component arrangements may be used. The illustrated components may be implemented in hardware, software, or a combination of software and hardware.

An embodiment of the present disclosure further provides a computer-readable storage medium. The computer-readable storage medium stores a computer program, when the computer program is executed by a processor, causes the steps of the cluster management method in the foregoing method embodiments to be performed. The storage medium may be a volatile or nonvolatile computer-readable storage medium.

An embodiment of the present disclosure further provides a computer program product. The computer program product carries a program code. Instructions included in the program code may be used to perform the steps of the cluster management method in the foregoing method embodiments. Details may be as shown in the foregoing method embodiments and will not be described redundantly here.

The computer program product may be implemented specifically by hardware, software, or a combination thereof. In one optional embodiment, the computer program product is embodied as a computer storage medium. In another optional embodiment, the computer program product is embodied as a software product, e.g., a software development kit (SDK) and the like.

A person skilled in the art can clearly understand that, for convenience and brevity of description, a reference may be made to corresponding processes in the foregoing method embodiments for the specific working process of the system and apparatus described above, which will not be described here redundantly. In several embodiments provided in the present disclosure, it should be understood that the disclosed system, apparatus and method may be implemented in other manners. The apparatus embodiment described above is merely an example. For example, the unit division is merely logical function division and may be other division in actual implementation. For another example, a plurality of units or components may be combined or integrated into another system, or some features may be ignored or not performed. In addition, the displayed or discussed mutual couplings or direct couplings or communication connections may be implemented through some communication interfaces. The indirect couplings or communication connections between the apparatuses or units may be implemented in electrical, mechanical, or other forms.

The units described as separate parts may or may not be physically separate. Parts shown as units may or may not be physical units, which may be located in one position, or may be distributed on a plurality of network units. Some or all of the units may be selected according to actual requirements to achieve the objectives of the solutions of the embodiments.

In addition, functional units in the embodiments of the present disclosure may be integrated into one processing unit, or each of the units may exist alone physically, or two or more units are integrated into one unit.

If implemented in a form of a software functional unit and sold or used as a stand-alone product, functions may be stored in a nonvolatile computer-readable storage medium executable by a processor. Based on such understanding, the technical solutions of the present disclosure essentially, or a part contributing to the prior art, or part of the technical solutions may be implemented in a form of a software product. The computer software product is stored in a storage medium, and includes several instructions for enabling a computer device (which may be a personal computer, a server, a network device, or the like) to perform all or some steps of the method described in the embodiments of the present disclosure. The foregoing storage medium includes any medium that can store program code, such as a USB flash drive, a removable hard disk, a read-only memory, a random-access memory, a magnetic disk, or an optical disc.

Finally, it should be noted that the above embodiments are merely specific implementations of the present disclosure, and are used to describe rather than limit the technical solutions of the present disclosure. The protection scope of the present disclosure is not limited thereto. Although the present disclosure is described in detail with reference to the above embodiments, it should be understood that a person of ordinary skill in the art can still make modifications to or readily figure out changes in the technical solutions described in the above embodiments, or make equivalent substitutions on some technical features therein. These modifications, changes, or substitutions do not make the essence of the corresponding technical solutions depart from the spirit and scope of the technical solutions of the embodiments of the present disclosure, and shall all fall within the protection scope of the present disclosure. Therefore, the protection scope of the present disclosure shall be subject to the protection scope of the claims.

## Claims

1. A cluster management method, comprising:
initiating, by a meta cluster, an addition and deletion task for a work cluster, wherein the addition and deletion task for a work cluster is used for instructing addition of a specified work cluster to a cluster system or instructing deletion of the specified work cluster from the cluster system, wherein the cluster system comprises at least one cluster; the at least one cluster comprises the meta cluster and at least one work cluster, the meta cluster is configured to execute operation and maintenance management control of the cluster system, the operation and maintenance management control comprises addition and deletion processing of a work cluster, and each of the at least one work cluster carries a business container to perform a business task (S101); and
controlling the specified work cluster to implement corresponding cluster deployment or removal in the cluster system according to instruction information of the addition and deletion task (S102).

2. The cluster management method according to claim 1, further comprising:
initializing a bootstrap environment for deploying the meta cluster (S302);
deploying a database for storing a cross-cluster domain name, deploying a domain name resolution server for providing cross-cluster domain name resolution service, and deploying an automated operation and maintenance tool and a remote execution engine (S302); and
performing a bootstrap deployment of the meta cluster (S303).

3. The cluster management method according to claim 1 or 2, wherein the instruction information of the addition and deletion task comprises cluster addition instruction information, wherein the cluster addition instruction information is used for instructing to newly add a first work cluster; and the controlling the specified work cluster to implement corresponding cluster deployment or removal in the cluster system according to instruction information of the addition and deletion task comprises:
performing a pre-deployment operation according to the cluster addition instruction information to implement intercommunication without a password between the first work cluster and the meta cluster;
building a remote execution engine for subsequent remote operation and maintenance based on the first work cluster; and
performing a bootstrap deployment of the first work cluster.

4. The cluster management method according to any one of claims 1-3, wherein the instruction information of the addition and deletion task comprises cluster deletion instruction information, wherein the cluster deletion instruction information is used for instructing to delete a second work cluster; and the controlling the specified work cluster to implement corresponding cluster deployment or removal in the cluster system according to instruction information of the addition and deletion task comprises:
cleaning up all components of the second work cluster by remotely executing a cleanup program according to the cluster deletion instruction information;
in response to completion of cleaning up the all components, generating a cleanup result feedback information by the second work cluster, and sending the cleanup result feedback information to the meta cluster; and
controlling the meta cluster to delete meta information of the second work cluster from the meta cluster based on the cleanup result feedback information.

5. The cluster management method according to any one of claims 1-4, wherein each cluster comprises a plurality of nodes, the cluster management method further comprises:
for each cluster, dividing the plurality of nodes into at least one node pool according to a type of a business task performed by each node in the cluster, wherein each node pool comprises at least one node.

6. The cluster management method according to any one of claims 1-5, further comprising:
initiating, by the meta cluster, a node addition task, wherein the node addition task is used for instructing a first target work cluster to add a first work node in the cluster system; and
according to instruction information of the node addition task, controlling the first target work cluster to perform pre-checking, pre-deployment, automated operation and maintenance and remote execution engine expansion, and cluster expansion, to implement deployment of the first work node in the first target work cluster.

7. The cluster management method according to any one of claims 1-6, further comprising:
initiating, by the meta cluster, a node deletion task, wherein the node deletion task is used for instructing a second target work cluster to delete a second work node in the cluster system;
and
according to instruction information of the node deletion task, controlling the second target work cluster to perform pre-checking, reduce automated operation and maintenance and remote execution engine work node, and reduce the second work node.

8. The cluster management method according to claim 2, further comprising:
receiving, by the meta cluster, a domain name resolution request sent by any work cluster (S801);
controlling the meta cluster to search for a resolution work cluster matching the domain name resolution request based on the domain name resolution server that is deployed, and forwarding the domain name resolution request to the resolution work cluster (S802); and
controlling the resolution work cluster to resolve the domain name resolution request to generate a corresponding domain name resolution result, and sending the domain name resolution result to the any work cluster by the meta cluster (S803).

9. A cluster management apparatus (1010), comprising:
a task initiation module (1011), configured to initiate, by a meta cluster, an addition and deletion task for a work cluster, wherein the addition and deletion task for a work cluster is used for instructing addition of a specified work cluster to a cluster system or instructing deletion of the specified work cluster from the cluster system, wherein the cluster system comprises at least one cluster; the at least one cluster comprises the meta cluster and at least one work cluster, the meta cluster is configured to execute operation and maintenance management control of the cluster system; the operation and maintenance management control comprises addition and deletion processing of a work cluster; and each of the at least one work cluster carries a business container to perform a business task; and
a cluster addition and deletion module (1012), configured to control the specified work cluster to implement corresponding cluster deployment or removal in the cluster system according to instruction information of the addition and deletion task.

10. An electronic device (1200), comprising a processor (1210), a memory (1220), and a bus (1230), wherein the memory stores machine-readable instructions executable by the processor, when the electronic device is running, the processor communicates with the memory by means of the bus, and the machine-readable instructions, when executed by the processor, cause the cluster management method according to any one of claims 1 to 8 to be performed.

11. A computer-readable storage medium, on which a computer program is stored,
wherein when the computer program is executed by a processor, the cluster management method according to any one of claims 1 to 8 is performed.
